# EUROPEAN PATENT SPECIFICATION

(11) **EP 1 557 380 B1**
(45) Date of publication and mention of the grant of the patent: **10.05.2006**
(21) Application number: 04425037.1
(22) Date of filing: 23.01.2004
(51) Int. Cl.: B65G 47/14

(54) **A device for arranging items**
Vorrichtung zur Anordnung von Artikeln
Dispositif pour ordonner des articles

(43) Date of publication of application: 27.07.2005
(73) Proprietor: GAMA S.r.l., 15073 Castellazzo Bormida AL (IT)
(72) Inventor: Porcellato, Gino, 15073 Castellazzo Bormida (Alessandria) (IT)
(74) Representative: Lanzoni, Luciano

(56) References cited:
- EP-A- 0 390 319
- US-A- 3 343 885
- US-A- 3 710 924
- US-A- 3 881 596
- US-A- 4 995 503
- US-A- 5 954 185
- US-A1- 2003 121 832

## Description

The present invention relates to a device for arranging items, for a user machine.

In particular, the present invention is applied in the sector of machines for bottling and filling containers, for example bottles or vials, to which this description refers without in any way limiting the scope of the invention.

In the above-mentioned sector, the feeding of an uncontrolled flow of items is known, said items consisting of caps used to close the containers, to an arranger device which, after aligning and angling them appropriately, transfers them along a feed path to a capping machine for the containers.

The caps considered herein are hollow and substantially cylindrical in shape and, with reference to their axis designed to coincide, after application, with the longitudinal axis of the container, they have a first, open end which is screwed or pressed onto the end of the neck of a container and a second, closed end.

Known types of arranging devices comprise a funnel-or truncated cone-shaped bowl with the tip pointing downwards, which moves with a rotary motion about a substantially vertical axis. The upper edge of the bowl is fitted with a ring-shaped flange, which forms a horizontal circular track, its width substantially equal to the longitudinal dimension of the caps, and a side wall, adjacent to the track and at a predetermined angle to it.

The outfeed of the ring-shaped flange is connected to the capping machine feed path, consisting of a straight conveyor substantially at a tangent to the flange.

Inside the bowl there is a fixed, spiral guide, extending from the bottom, in which the caps collect, to its upper edge and designed to intercept the caps, positioning them in a row and to make them run upwards onto the track, and resting on the angled side wall.

A device of this kind is known from document US2003/0121832 which discloses a piece feeder comprising a rotating cylindrical bowl with an aligning track on its upper edge which is driven by a motor in a cylindrical outer housing and having a piece lifter which is attached to the outer housing with constant clearance from the bowl periphery. The piece lifter has a slope on its upper edge that starts at or below the bowl bottom and ends at the aligning track.

It is also known, from document US5954185, a centrifugal feeder for rectangular items with one of its upper or lower surfaces having luminescent characteristics which are greater than the other surface. The feeder has a rotating bowl surrounded by a rotating rim. A sweep pushes the items randomly onto the rim and a pair of sweeps then insure that the items are flat and only one layer high. The rim then narrows so that items not disposed with their elongated axis tangentially will over balance and fall off the rim.

Again as is known, the capping machine requires the caps to be fed to it individually in an orderly sequence, fed in a direction transversal to their longitudinal axis and angled so that the open ends are all facing in the same direction relative to their direction of feed.

The caps are arranged in a row and their axes positioned transversally to their direction of feed by the combined action of the rotary movement of the bowl and the opposing fixed spiral guide.

The open ends are angled as described below.

The angle of the side wall designed to make contact with one of the two longitudinal ends of the caps is chosen in such a way as to cause caps whose closed longitudinal ends are facing the inside of the bowl to tip over and drop to the bottom of the bowl and, on the contrary, caps angled in the opposite direction to be fed towards the cap outfeed conveyor.

In light of the above, it is obvious that the centre of gravity of the caps is not at an equal distance from the two ends of the caps, but closer to the closed end.

In other words, the wall is set at an angle which causes incorrectly positioned caps to tip over.

Obviously, if there is a change in the size of the caps used, the ring-shaped flange must be substituted with another, designed to guarantee said selective cap feed.

This substitution is time consuming and must be performed by specialised personnel, requiring the availability of a rather large number of flanges according to the various types of caps processed.

The aim of the present invention is to provide a device for arranging items which is able to overcome the above-mentioned disadvantages.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic plan view of a device for arranging items according to the present invention;
- Figure 2 is a schematic side view, with some parts cut away and others in cross section, of the device of Figure 1.
- Figure 3 is an enlarged schematic perspective view of a detail of the device illustrated in Figure 1;
- Figures 4 and 5 are a schematic side view and a cross-section of a detail illustrated in Figure 3 in two different embodiments.

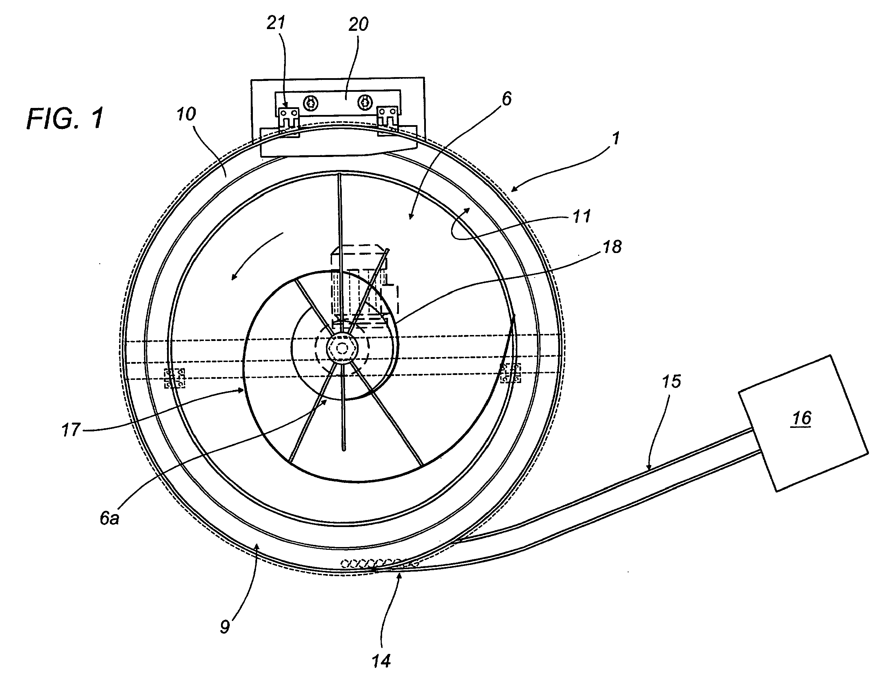

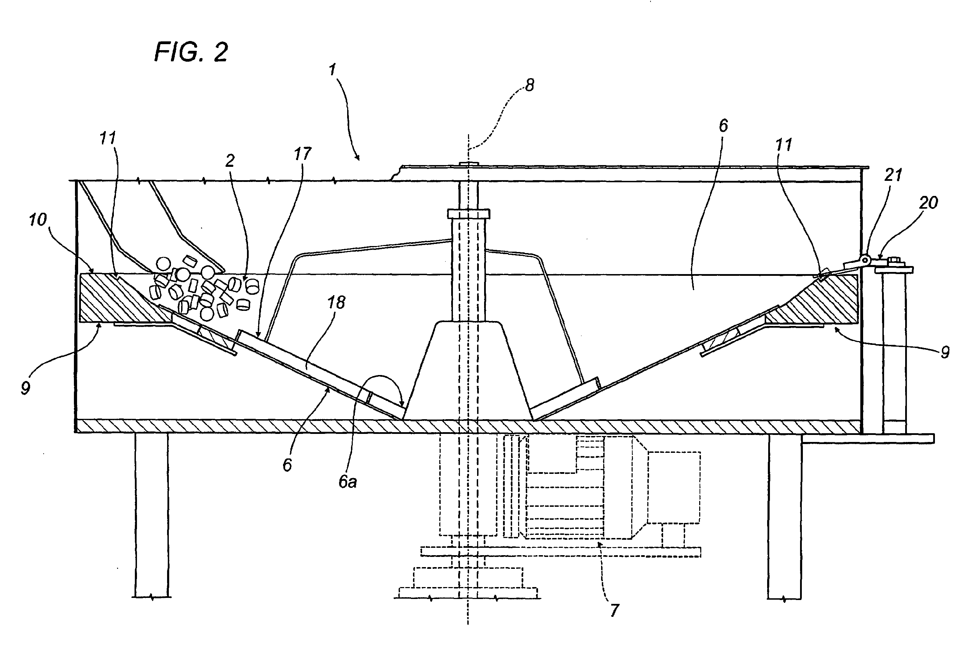

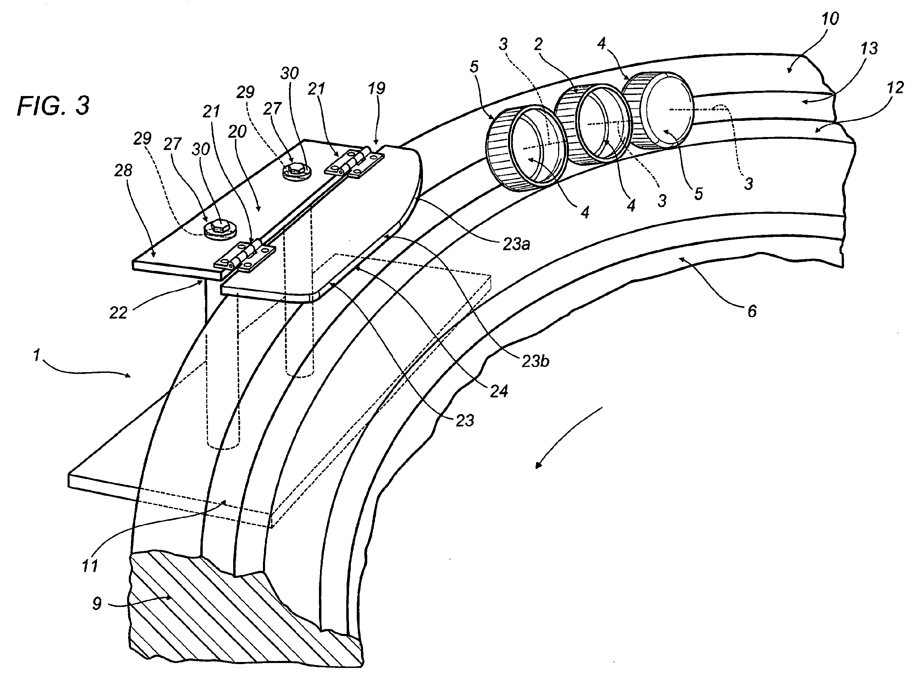

With reference to Figures 1 and 2, the numeral 1 indicates as a whole a device for arranging items 2, in particular as illustrated in Figures 3, 4 and 5, substantially cylindrical caps having, with reference to their longitudinal axis 3, a first, open end 4 for application on the mouth of a container, not illustrated, and a second, closed end 5.

The device 1 for arranging items comprises a substantially truncated cone-shaped bowl 6 with the tip facing downwards and rotationally driven by a motor 7 about a substantially vertical axis 8, in an anti-clockwise direction as illustrated in Figures 1 and 3.

The top of the bowl 6 terminates with a ring-shaped flange 9 having a flat upper edge 10 and with an internal track 11, also ring-shaped and defined by a cap 2 lower supporting wall 12 and a cap 2 side contact wall 13, and forming an angle with predetermined amplitude, normally substantially a right angle, to the wall 12.

The ring-shaped flange 9 may be an integral part of the bowl 6 or, as illustrated in the embodiment in Figures 1 and 2, it may be mounted on the bowl 6. Moreover, the flange 9 outfeed zone 14 is connected to a conveyor 15, substantially at a tangent to the flange 9 and for cap 2 outfeed and feeding to a user machine, for example, a capping machine, schematically illustrated with a block 16 (Figure 1).

The bowl 6 comprises arranging means 17 consisting of a fixed spiral guide 18 extending from the bottom 6a of the bowl 6 to a point at a tangent to the flange 9 track 11.

At a predetermined position along the track 11, the arranging device 1 comprises selector means 19 able to change the position of the centre of gravity of the caps 2 along the track 11 and relative to the latter. The selector means 19 comprise a fixed plate 20 mounted, by means of hinges 21, on a relative support 22. The plate 20 lies in a plane substantially transversal to the axis of rotation 8 of the bowl 6 and makes sliding contact with the edge of the surface 10 of the flange 9. The hinges 21 allow the plate 20 to swing about a horizontal axis substantially at a tangent to the flange 9 and to follow the profile of the edge 10 without jamming.

The plate 20 has an edge 23 extending into the track and forming a profile 24 which intercepts the caps 2. More precisely, the edge 23 has a first, rounded section 23a for guiding the caps 2 and a second, arch-shaped section 23b.

In practice, the caps 2 are fed in bulk by a pipe 25 above the bowl 6 with a continuous or intermittent flow and in such a way that they collect at the bottom 6a of the bowl 6.

The combined action of bowl 6 rotation and contact with the fixed spiral guide 18 lifts the caps 2 from the bottom 6a of the bowl 6 and allows them to be positioned on the flange 9 track 11 in an orderly row and in contact with the supporting wall 12 with the cylindrical side surface and with the longitudinal axes 3 positioned transversally to their direction of feed and substantially at a right angle to the contact wall 13.

The transversal dimension of the supporting wall 12 and the amplitude of the angle defined by the latter and the side contact wall 13, are selected in such a way as to maintain in a stable position both the caps 2 resting on the wall 13 with their open end 4, and the caps 2 resting on the wall 13 with their closed end 5. The selector means 19 ensure that only those caps 2 with their open ends facing the inside of the bowl 6 reach the feed conveyor 15.

It is evident that, in light of the above, since the centre of gravity of the caps 2 is not at an equal distance from both of the ends 4 and 5 but is closer to the closed end 5, the profile 24 of the plate 20 is designed to change the position and equilibrium of the caps 2 relative to the track 11, causing only those caps 2 whose closed end 5 is facing the bowl 6 axis of rotation to tip over and drop to the bottom 6a of the bowl 6.

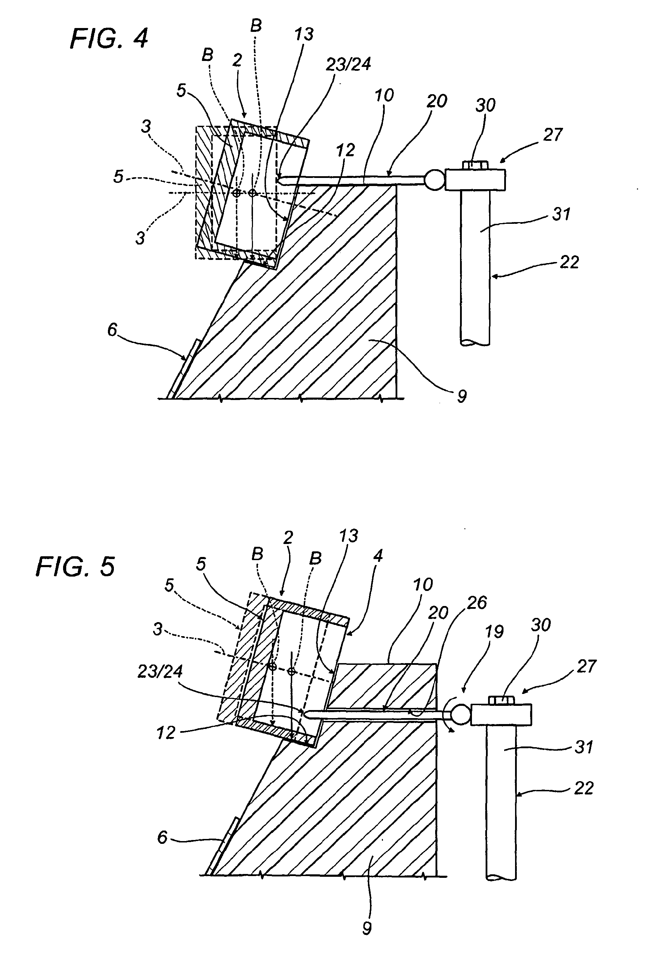

In particular, caps 2 may be selected by positioning the plate 20, as illustrated in Figures 3 and 4, above the flat edge 10 of the ring-shaped flange 9 or in a position such that its interception profile 24 changes the angle of the caps 2 relative to the track 11.

The angle of the caps 2 increases until it reaches a position, illustrated with a dashed line in Figure 4, in which the centre of gravity B of the caps 2 which are incorrectly positioned, that is to say with their closed end 5 facing the bowl 6, moves out of the track 11 supporting wall 12, the cap 2 consequently tipping over and dropping to the bottom 6a of the bowl 6.

Alternatively, as illustrated in Figure 5, the plate 20 may be positioned, by means of a slot 26 in the ring-shaped flange 9, at a level such that its profile 24 causes the caps 2 to move transversally, as illustrated with a dashed line, until the centre of gravity B overbalances and the caps 2 which are incorrectly positioned drop to the bottom 6a of the bowl 6.

The numeral 27 denotes means for the transversal adjustment of a plate 28, which is part of the supporting means 22, and consisting, as illustrated in Figure 3, of a pair of slots 29 made in the plate 28 and respective locknuts 30 screwed into threaded holes, not visible and made at the ends of a pair of vertical rods 31 which are also part of the supporting means 22.

The adjusting means 27 allow a simple adjustment of the position of the plate 20 profile 24 according to the type and size of the caps 2 processed.

It will be understood that the invention can be subject to modifications and variations without thereby departing from the scope of the inventive concept. Moreover, all the details of the invention may be substituted by technically equivalent elements.

## Claims

1. A device for arranging caps (2) comprising a bowl (6) rotating about a substantially vertical axis (8) and containing a flow of said caps (2) fed in bulk, an upper edge of the bowl (6) comprising a ring-shaped flange (9) with a ring-shaped track (11) connected to an outfeed conveyor (15) for the caps (2) and comprising a lower supporting wall (12) and a side contact wall (13) for the caps (2); there being means (17) for arranging the caps, operating in conjunction with the bowl (6) to feed the caps (2) in a row along the track (11), the caps being positioned along the track (11) with their longitudinal axes (3) positioned transversally to their direction of feed, the device further comprising fixed selector means (19) ; **characterised in that** the selector means (19) are positioned along the track (11) and comprises an edge extending partially into the track and forming an interception profile (24) able to intercept the caps (2) in such a way to move the centre of gravity (B) of the caps (2), which are incorrectly positioned, out of the track (11) supporting wall (12), the cap (2) consequently tipping over and dropping to the bottom (6a) of the bowl (6).

2. The device according to claim 1, **characterised in that** the interception profile (24) of the selector means (19) is a medium for moving the caps (2) transversally relative to the track (11).

3. The device according to claim 1, **characterised in that** the interception profile (24) of the selector means (19) is a medium for changing the angle of the caps (2) relative to the track (11).

4. The device according to claim 1, **characterised in that** the interception profile (24) of the selector means (19) is a medium for moving the caps (2) transversally and a medium for changing their angle relative to the track (11).

5. The device according to claim 1, **characterised in that** the selector means (19) comprise a plate (20) mounted on relative supporting means (22) and lying in a plane substantially transversal to the axis of rotation (8) of the bowl (6), the plate (20) having an edge (23) forming the interception profile (24).

6. The device according to claim 5, **characterised in that** the edge (23) has a first, guide section (23a) and is arch shaped.

7. The device according to claim 5, **characterised in that** the plate (20) is mounted on the relative supporting means (22) using hinges (21) so that it tilts about an axis transversal to the axis of rotation (8) of the bowl (6) and substantially at a tangent to the track (11).

8. The device according to claim 5, **characterised in that** it comprises means (27) for adjusting the plate (20) to allow radial adjustment relative to the axis of rotation (8) of the bowl (6).

9. The device according to claim 1, **characterised in that** the bowl (6) is substantially truncated cone-shaped with the tip pointing downwards and the arranging means (17) comprise a fixed guide (18), which lifts the caps (2), the guide forming a spiral and extending from the bottom (6a) of the bowl (6) to a point at a tangent to the flange (9) track (11).

## Patentansprüche

1. Vorrichtung zur Anordnung von Kappen (2), enthaltend eine Schale (6), die sich um eine im wesentlichen vertikale Achse (8) dreht und einen Fluss der genannten, in loser Anordnung zugeführten Kappen (2) enthält, wobei ein oberer Rand der Schale (6) einen ringförmigen Flansch (9) mit einer ringförmigen Spur (11) enthält, angeschlossen an einen Ausgangsförderer (15) für die Kappen (2) und enthaltend eine untere Stützwand (12) und eine seitliche Kontaktwand (13) für die Kappen (2); wobei Mittel (17) zum Anordnen der Kappen vorhanden sind, zusammenwirkend mit der Schale (6), um die Kappen (2) in einer Reihe entlang der Spur (11) zuzuführen, und wobei die Kappen entlang der Spur (11) mit ihren Längsachsen (3) quer zu ihrer Zuführrichtung positioniert angeordnet sind, wobei die Vorrichtung ausserdem Sortiermittel (19) enthält; **dadurch gekennzeichnet, dass** die Sortiermittel (19) entlang der Spur (11) angeordnet sind und eine Kante enthalten, die sich teilweise bis in die Spur erstreckt und ein Abfangprofil (24) bildet, in der Lage, die Kappen (2) auf solche Weise abzufangen, dass der Schwerpunkt (B) der Kappen (2), welche nicht korrekt positioniert sind, aus der Stützwand (12) der Spur (11) heraus bewegt wird, wodurch die Kappe (2) folglich umkippt und auf den Boden (6a) der Schale (6) fällt.

2. Vorrichtung nach Patentanspruch 1, **dadurch gekennzeichnet, dass** das Abfangprofil (24) der Sortiermittel (19) ein Mittel zum Bewegen der Kappen (2) quer im Verhältnis zu der Spur (11) ist.

3. Vorrichtung nach Patentanspruch 1, **dadurch gekennzeichnet, dass** das Abfangprofil (24) der Sortiermittel (19) ein Mittel zum Verändern des Winkels der Kappen (2) im Verhältnis zu der Spur (11) ist.

4. Vorrichtung nach Patentanspruch 1, **dadurch gekennzeichnet, dass** das Abfangprofil (24) der Sortiermittel (19) ein Mittel zum Bewegen der Kappen (2) in Querrichtung und ein Mittel zum Verändern von deren Winkel im Verhältnis zu der Spur (11) ist.

5. Vorrichtung nach Patentanspruch 1, **dadurch gekennzeichnet, dass** die Sortiermittel (19) eine Platte (20) enthalten, montiert an entsprechenden Trägermitteln (22) und in einer im wesentlichen quer zu der Drehachse (8) der Schale (6) verlaufenden Ebene liegend, wobei die Platte (20) eine Kante (23) aufweist, die ein Abfangprofil (24) bildet.

6. Vorrichtung nach Patentanspruch 5, **dadurch gekennzeichnet, dass** die Kante (23) einen ersten Führungsabschnitt (23a) hat und bogenförmig ausgebildet ist.

7. Vorrichtung nach Patentanspruch 5, **dadurch gekennzeichnet, dass** die Platte (20) an den entsprechenden Trägermitteln (22) unter Verwendung von Scharnieren (21) montiert ist, so dass sie um eine Achse quer zu der Drehachse (8) der Schale (6) und im wesentlichen tangential zu der Spur (11) gekippt werden kann.

8. Vorrichtung nach Patentanspruch 5, **dadurch gekennzeichnet, dass** sie Mittel (27) zum Regulieren der Platte (20) enthält, um eine radiale Einstellung im Verhältnis zu der Drehachse (8) der Schale (6) zu erlauben.

9. Vorrichtung nach Patentanspruch 1, **dadurch gekennzeichnet, dass** die Schale (6) im wesentlich stumpfkegelförmig ausgebildet ist, mit der Spitze nach unten gerichtet, und die Anordnungsmittel (17) eine feststehende Führung (18) enthalten, welche die Kappen (2) anhebt, wobei die Führung eine Spirale bildet und sich von dem Boden (6a) der Schale (6) aus bis zu einem Punkt tangential zu der Spur (11) des Flansches (9) erstreckt.

## Revendications

1. Un dispositif pour ordonner des bouchons (2), comprenant une cuvette (6) tournant autour d'un axe (8) essentiellement vertical et contenant un flux desdits bouchons (2) alimentés en vrac, un bord supérieur de la cuvette (6) comprenant une bride annulaire (9) présentant une piste annulaire (11) raccordée à un convoyeur (15) de sortie des bouchons (2) et comprenant une paroi inférieure (12) de support et une paroi latérale (13) de contact pour les bouchons (2) ; des moyens (17) pour la mise en ordre des bouchons étant prévus, fonctionnant en association avec la cuvette (6) pour alimenter les bouchons (2) en file le long de la piste (11), les bouchons étant positionnés le long de la piste (11) avec leur axe longitudinal (3) respectif disposé transversalement à leur direction d'avancement, le dispositif comprenant en outre des moyens sélecteurs (19) fixes ; ledit dispositif étant **caractérisé en ce que** les moyens sélecteurs (19) en question sont positionnés le long de la piste (11) et comprennent un bord s'étendant en partie dans la piste et définissant un profil d'interception (24) destiné à intercepter les bouchons (2) de manière à déplacer le centre de gravité (B) des bouchons (2), ceux qui sont mal positionnés, en dehors de la paroi de support (12) de la piste (11), le bouchon (2) basculant en conséquence et tombant sur le fond (6a) de la cuvette (6).

2. Le dispositif selon la revendication 1, **caractérisé en ce que** le profil d'interception (24) des moyens sélecteurs (19) est un moyen pour déplacer transversalement les bouchons (2) par rapport à la piste (11).

3. Le dispositif selon la revendication 1, **caractérisé en ce que** le profil d'interception (24) des moyens sélecteurs (19) est un moyen pour modifier l'orientation des bouchons (2) par rapport à la piste (11).

4. Le dispositif selon la revendication 1, **caractérisé en ce que** le profil d'interception (24) des moyens sélecteurs (19) est un moyen pour déplacer transversalement les bouchons (2) et un moyen pour modifier leur orientation par rapport à la piste ((11).

5. Le dispositif selon la revendication 1, **caractérisé en ce que** les moyens sélecteurs (19) comprennent une plaque (20) qui est montée sur des moyens de support (22) correspondants et repose dans un plan essentiellement transversal à l'axe de rotation (8) de la cuvette (6), la plaque (20) ayant un bord (23) qui définit le profil d'interception (24).

6. Le dispositif selon la revendication 5, **caractérisé en ce que** le bord (23) a une première section de guidage (23a) et a la forme d'un arc.

7. Le dispositif selon la revendication 5, **caractérisé en ce que** la plaque (20) est montée sur les moyens de support (22) correspondants par l'intermédiaire de charnières (21) de manière à pouvoir basculer autour d'un axe qui est transversal à l'axe de rotation (8) de la cuvette (6) et essentiellement tangent à la piste (11).

8. Le dispositif selon la revendication 5, **caractérisé en ce qu'**il comprend des moyens (27) de réglage de la plaque (20) de manière à permettre un réglage radial par rapport à l'axe de rotation (8) de la cuvette (6).

9. Le dispositif selon la revendication 1, **caractérisé en ce que** la cuvette (6) présente une forme essentiellement troncoconique avec la pointe orientée vers le bas, et **en ce que** les moyens de mise en ordre (17) comprennent un guide fixe (18) de soulèvement des bouchons (2), le guide formant une spirale et se développant à partir du fond (6a) de la cuvette (6) jusqu'à un point de tangence avec la piste (11) de la bride (9).
